# EUROPÄISCHE PATENTANMELDUNG

(11) **EP 1 296 471 A2**
(43) Veröffentlichungstag der Anmeldung: **26.03.2003**
(21) Anmeldenummer: 02021491.2
(22) Anmeldetag: 25.09.2002
(51) Int. Cl.: H04B 10/18

(54) **Kompensationsanordnung zur adaptiven Entzerrung eines optischen Signals**

(30) Priorität: 25.09.2001 DE 10147161; 25.09.2001 DE 10147162; 25.09.2001 DE 10147063
(71) Anmelder: SIEMENS AKTIENGESELLSCHAFT, 80333 München (DE)
(72) Erfinder: Bohn, Marc, 81543 München (DE); Glingener, Christoph, Dr., 83620 Feldkirchen-Westerham (DE); Mohs, Georg, Dr., 08850 Milltown, NJ (US); Mietzner, Jan, 24247 Mielkendorf (DE); Otte, Sven, 24113 Kiel (DE); Rosenkranz, Werner, Prof., 24235 Laboe (DE); Scheerer, Christian, Dr., Ottawa, Ontario K1S 2S4 (CA)

(57) **Zusammenfassung**

Ein optisches Filter (FI), dessen komplexe Koeffizienten (k1+jk1; k2+jk2; ...; km+jkm) einstellbar sind, wird zur Signalentzerrung eingesetzt. Als Regelkriterium wird die Qualität des in ein elektrisches Datensignal (DS) umgesetzten optischen Signals verwendet.

Die Kompensationseinrichtung kann durch Dispersion, Polarisationsmodendispersion oder Selbstphasenmodulation erzeugte Verzerrungen weitgehend kompensieren.

Durch ein optisches Kompensationsfilters (FIW) mit großem Free Spectral Range wird die wellenlängenabhängige Dispersion bei einem Wellenlängen-Mulitplexsystem kompensiert. Die Einstellung des Filters (FIW) kann fest sein oder in einem Regelkreis adaptiv vorgenommen werden.

## Beschreibung

Die Erfindung betrifft eine Kompensationsanordnung zur adaptiven Entzerrung eines optischen Signals mit einem einstellbaren optischen Filter nach dem Oberbegriff des Anspruchs 1.

Bei der Übertragung von optischen Signalen (Impulsen) über eine optische Faser werden diese verzerrt. Diese Verzerrungen reduzieren die Signalqualität und begrenzen insbesondere bei hohen Bitraten die regeneratorfreie Reichweite erheblich. Eine wellenlängenabhängige Dämpfung kann durch geeignete Verstärker kompensiert werden. Andere Effekte wie Gruppenlaufzeitdispersion, Polarisationsmodendispersion (PMD) und Selbstphasenmodulation (SPM) versucht man durch geeignete Maßnahmen zu kompensieren.

In "Optics Communications", Vol. 182, No. 1-3, pp.135 - 141 wird ein Verfahren zur PMD-Kompensation durch einen optischen Kompensator erster Ordnung und durch ein einstellbares elektrisches Transversalfilter verglichen.

Zur Kompensation der Gruppenlaufzeitdispersion, im folgenden kurz als Dispersion bezeichnet, wurden bisher hauptsächlich spezielle Fasern verwendet, deren Gruppenlaufzeiteigenschaften invers zu denen der Übertragungsfasern sind.

Aus "ECOC'99" Vol. 2, pp. 138 - 139, H. Bühlow et al ist ein einstellbares elektrisches Transversalfilter beschrieben, dass zur Kompensation von PMD und Dispersion verwendet wird.

Aus der Internationalen Patentanmeldung WO 00/50944 ist eine Anordnung zur Dispersionskompensation bekannt, bei der ein Bragg-Grating-Filter entsprechend der Dispersion gesteuert wird. Ein Dispersionsanalysator bewertet beispielsweise die Augenöffnung oder die Bitfehlerrate. Die ermittelte Signalqualität wird als Regelkriterium verwendet. Die Anordnung kann ebenfalls für PMD-Kompensation verwendet werden.

Aus der Europäischen Patentanmeldung EP 0 740 173 A2 ist bekannt, ein optisches Transversalfilter zur Dispersionskompensation bei einzelnen Kanälen oder gleichzeitig für alle Kanäle eines Wellenlängen-Multiplex-Systems zu verwenden. Hierdurch wird der Aufwand gegenüber separaten Filtern oder Kompensationsanordnungen für einzelne Kanäle reduziert. Die Kompensation durch ein periodisches Filter weist für alle Kanäle den selben Kompensationseffekt auf, ist jedoch bei Vorliegen einer wellenlängenabhängigen Dispersion (Dispersion höherer Ordnung) nicht optimal, bei der sich die Steigung des Dispersionsverlaufs ändert.

Außerdem ist es an sich bekannt, eine Dispersions-Grundkompensation mit Hilfe einer entsprechenden Faser durchzuführen und diese mit einer Feinkompensation mit elektrischen Filtern zu kombinieren.

Aufgabe der Erfindung ist es, eine Anordnung zur adaptiven Signalentzerrung anzugeben.

Diese Aufgabe wird durch eine Anordnung nach Anspruch 1 gelöst.

Vorteilhafte Weiterbildungen der Erfindung sind in den Unteransprüchen angegeben.

Der Vorteil der Erfindung liegt in der Anpassungsmöglichkeit des optischen Filters an die Verzerrungen, die durch Dispersion, PMD oder SPM verursacht wurden. Eine Kompensation im optischen Bereich führt zu besseren Ergebnissen als im elektrischen Bereich, da vor optoelektrischen Umwandlung entzerrt wird. Die Photodiode als elektrooptischer Wandler ist ein nichtlineares Element mit quadratischer Kennlinie, die eine Einhüllende des übertragenen amplitudenmodulierten Signals als demoduliertes Signal abgibt. Der Träger und jegliche Phaseninformation gehen bei der Umsetzung in ein elektrisches Signal verloren.

Um eine zufriedenstellende Kompensation durchführen zu können, ist es erforderlich, eine optimale komplexe Übertragungsfunktion des Kompensationsfilters einzustellen. Dies heißt, dass bei einem Transversalfilter komplexe Koeffizienten eingestellt werden. Zwar können prinzipiell sowohl FIR-Filter (finite impuls response) als auch IIR-Filter (infinite impuls response) oder eine Kombination beider Filtertypen verwendet werden, Transversalfilter sind jedoch wegen ihrer guten Einstellmöglichkeit vorzuziehen, ggf. in Kombination mit einem rekursiven Filtertyp.

Prinzipiell jede Art der Verzerrung kompensiert werden, unabhängig von ihrer Ursache. Man unterscheidet zwischen einer adaptiven Kompensation und einer Kompensation durch ein inverses System. Bei einem adaptiven Ansatz wird eine optimale Entzerrung durchgeführt, ohne dass das inverse System als Übertragungsfunktion nachgebildet wird.

Bei einem inversen System wird versucht, die inverse Übertragungsfunktion zu bilden. Diese ist zunächst fest eingestellt, kann aber auch eine adaptive Komponente erhalten.

Bei der Dispersions-Kompensation kann eine Grundkompensation der durch eine dispersionskompensierende Faser (DCF) oder ein weiteres (einstellbares) Kompensationsfilter erfolgen, wodurch der benötigte Einstellbereich des Filters verringert wird.

Auch können mehrere adaptive Kompensationseinrichtungen in Serie geschaltet werden, beispielsweise eine Dispersionskompensation für ein Übertragungsband mit mehreren Wellenlängen-Multiplexskanälen und eine kanalindividuelle PMD-Kompensationsanordnung. Zur Kompensationssteuerung wird vorzugsweise die Signalqualität, beispielsweise Augenöffnung oder Bitfehlerrate, oder das Spektrum bewertet und eine Optimierung der Kompensation durch Variation der Koeffizienten durchgeführt.

Ebenso kann eine Kompensation mit optische und elektrischen Filtern durchgeführt werden.

Bei Dispersionskompensation liegt der besondere Vorteil in der individuellen Gestaltung des zur Übertragungsfaser inversen Dispersionsverlaufes des optischen Kompensationsfilters. Die Periode (free spectral range - FSR) des Filters umfasst mehrere Übertragungskanäle, vorzugsweise sämtliche Kanäle eines Wellenlängen-Multiplexsignals, so dass vorzugsweise alle WDM-Kanäle mit nur einem Filter kompensiert werden können, oder sogar ein ganzes Übertragungsband.

In einer erweiterten Ausführungsform wird das Filter adaptiv eingestellt, wobei charakteristische oder alle Übertragungskanäle Qualitätskriterien liefern. Hierdurch kann auf eine Änderung der Systemparameter reagiert werden.

Die heute gebräuchlichen optischen Filter weisen häufig eine nicht zufriedenstellende Übertragungsfunktion, insbesondere einen nichtidealen Phasengang, auf. Dieser kann mit Hilfe eines Korrekturfilters entzerrt werden. Die insgesamt gewünschten Filtereigenschaften, beispielsweise ein bestimmter Frequenzgang oder ein großer Verstellbereich der Durchlass oder Sperrfrequenz, können nicht allein das gewünschte Korrekturfilter (Filterfunktion) realisiert werden. Durch die Kombination der nichtidealen Komponente, z.B. eines Bragg-Gitters, mit einem optischen Korrekturfilter zur Entzerrung kann eine ideale Komponente geschaffen werden.

Die Erfindung wird anhand von Ausführungsbeispielen näher erläutert.

Es zeigen:
- Figur 1: ein Prinzipschaltbild der Kompensationsanordnung,
- Figur 2: ein Prinzipschaltbild eines Transversalfilters,
- Figur 3: das Prinzipschaltbild eines IIR-Filters,
- Figur 4: eine PMD-Kompensationsanordnung,
- Figur 5: ein Prinzipschaltbild der Anordnung zur wellenlängenabhängigen Dispersionskompensation,
- Figur 6: ein Prinzipschaltbild zur adaptiven Dispersionskompensation und
- Figur 7: ein Prinzipschaltbild einer mehrstufigen Kompensationsanordnung.

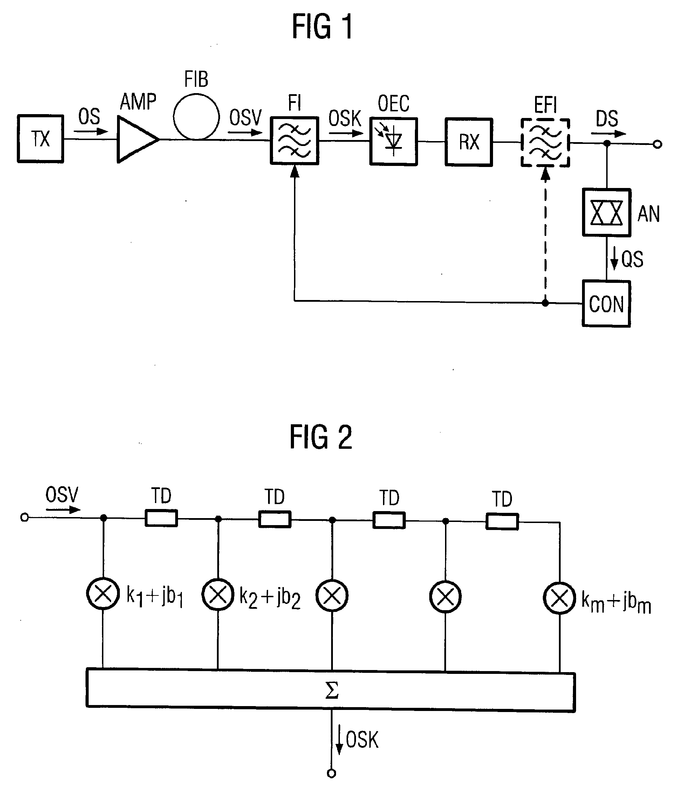

**Figur 1** zeigt das Prinzip eines Übertragungssystems mit der erfindungsgemäßen Kompensationsanordnung FI, OEC, RX, AN, CON. Ein Sender TX gibt ein mit einem binären Signal moduliertes optisches Signal OS ab, dass in einem Verstärker AMP verstärkt und über eine optische Faser FIB übertragen wird. Auf der Übertragungsstrecke können weitere Verstärker und Dispersions-Kompensationseinrichtungen, meist dispersionskompensierende Fasern, eingefügt sein. Das durch Dispersion und nichtlineare Effekte verzerrte optische Signal OSV wird einer im wesentlichen aus einem optischen Kompensationsfilter FI, einem Analysator AN und einer Steuereinrichtung CON bestehenden Regeleinrichtung zugeführt. Da der Analysator und die Steuereinrichtung elektrisch arbeiten, ist vorher eine Umsetzung durch einen optoelektrischen Wandler OEC erforderlich. Der diesem nachgeschalteten Empfänger RX verstärkt das elektrische Signal linear und gibt an seinem Ausgang das noch nicht begrenzte oder abgetastete Datensignal DS ab. Ein an den Ausgang des Empfängers - oder über einen Splitter am Ausgang des Kompensationsfilters und einem weiteren opto-elektrischen Wandler - angeschaltete Analysator AN bewertet die Qualität des Datensignals. Dies kann durch Bewertung der Augenöffnung, der Bitfehlerrate oder des Spektrums erfolgen. Ein vom Qualitätskriterium abgeleitetes Regelsignal QS wird der Steuereinrichtung CON zugeführt. Diese verändert nach einem Optimierungsalgorithmus die komplexen Koeffizienten des Kompensationsfilters FI bis ein Qualitätsmaximum erreicht ist.

Durch ein dem optischen Filter nachgeschaltetes elektrisches Filter EFI, das fest oder adaptiv einstellbar ist, kann die Kompensation und eine Impulsformung weiter verbessert werden.

Ein optisches Transversalfilter (FIR - finite impulse response), dessen prinzipieller Aufbau in **Figur 2** dargestellt ist, enthält Laufzeitglieder TD, Multiplikatoren "x" und mindestens eine Summierschaltung Σ. Die komplexen Koeffizienten k₁ + jb₁ bis kₘ + jbₘ der Multiplikatoren können durch Einstellung der Phase (Laufzeitänderung) und der Dämpfung in den verschiedenen Zweigen geändert werden. Die Feinabstimmung der Phase kann beispielsweise durch eine Änderung des Brechungsindexes optischer Elemente aufgrund von Erwärmung erfolgen. Es sind mehrere Realisierungsmöglichkeiten bekannt, so dass hier nicht darauf eingegangen zu werden braucht. Prinzipiell ist jedoch die Filterstruktur gleichgültig.

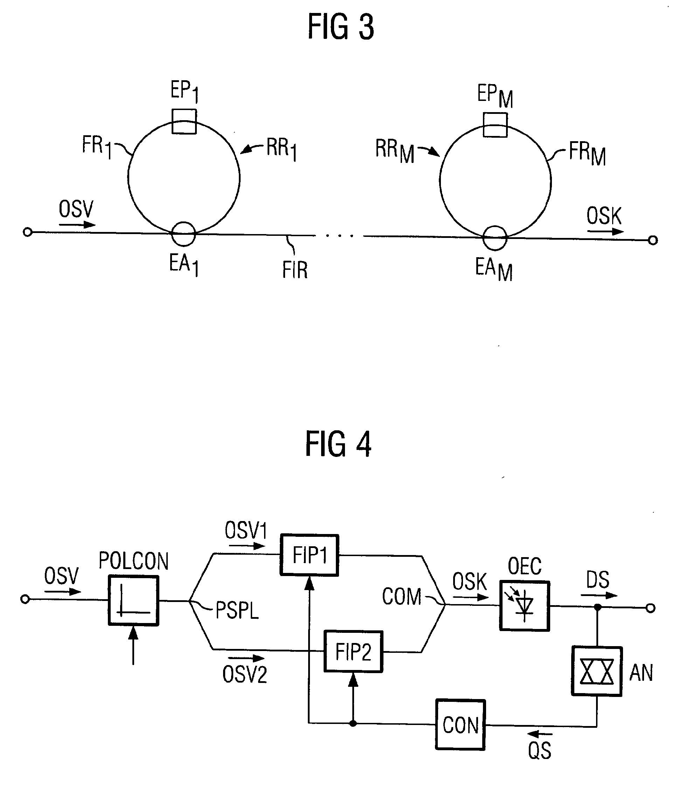

In **Figur 3** ist ein weiteres Kompensationsfilter (IIR - infinte impulse response) dargestellt, das mit Hilfe von Ringresonatoren RR₁, ..., RR_{M} realisiert ist. Über erste Amplituden-Einstellglieder EA₁ - EA_{M} sind die Ringresonatoren an die Faser FIR angekoppelt, in die das verzerrte Signal OSV eingespeist wird. Diese Einstellglieder bestimmen die reellen Koeffizienten, während über in die Fasern FR₁ - FR_{M} der Ringresonatoren eingefügte zweite Phasen-Einstellglieder EP₁ - EP_{N} jeweils die Laufzeit und damit die Phase, d. h. der imaginäre Koeffizient geändert wird. Bei dieser Anordnung sind weniger Koeffizienten zur Kompensation erforderlich.

Die Kompensationsanordnung bewirkt stets eine Optimierung des Datensignals unabhängig von der Ursache der Verzerrungen. Eine solche Anordnung kann beispielsweise zur Kompensation der chromatischen Dispersion oder Polarisationsmodendispersion verwendet werden. Auch Selbstphasenmodulation kann kompensiert werden, indem die SPM verursachenden Eigenschaften der Übertragungsfaser durch eine inverse Kompensationsfunktion kompensiert wird. Das selbe gilt auch für Verzerrungen, die durch mehrere Ursachen hervorgerufen werden.

Die Kompensationsanordnung kann jeweils für einen Übertragungskanal vorgesehen werden oder - bei WDM-Systemen wirtschaftlicher - mit nur einem Filter für mehrere oder alle Kanäle eines Übertragungsbandes ausgebildet sein - wenn die Periodizität des Filters entsprechend dem Kanalabstand des WDM-Systems gewählt ist. Diese Anordnung eignet sich insbesondere zur Grundkompensation von Gruppenlaufzeitdispersion und/oder Selbstphasenmodulation.

Eine vorteilhafte Anordnung speziell zur PMD-Kompensation ist in **Figur 4** dargestellt. Der Reihenschaltung eines Polarisationsstellers POLCON und eines Polarisationssplitters PSPL wird das verzerrte optisch Signal OSV zugeführt, das in zwei orthogonale Signalkomponenten (Polarisationsebenen) OSV1 und OSV2 aufgespalten wird. Der Polarisationsteller sorgt durch eine nicht dargestellte Regelung für eine stabile Polarisation. Die Signalkomponenten OSV1 und OSV2 werden jeweils einem optischen Kompensationsfilter FIP1 und FIP2 zugeführt, die beide geregelt werden. Prinzipiell kann eines der Kompensationsfilter durch ein fest eingestelltes Filter oder durch ein festes oder gesteuertes Laufzeitglied ersetzt werden, wodurch allerdings der Stellmöglichkeiten eingeschränkt werden. Die Signalkomponenten OSV1 und OSV2 werden einzeln entzerrt und ihre Laufzeitdifferenzen ausgeglichen und dann durch einen Kombinierer (Combiner) COM zu einem kompensierten Signal OSK zusammengefasst. Nach der Umsetzung in ein elektrisches Datensignal DS wird die Signalqualität in dem Analysator AN überprüft und die Filterkoeffizienten entsprechend dem Regelsignal QS durch die Steuereinrichtung CON eingestellt. Auch Kompensationsanordnung kann um weitere elektrische Filter zur kanalindividuellen Entzerrung von PMD, SPM oder wellenlängenabhängiger Dispersion ergänzt werden.

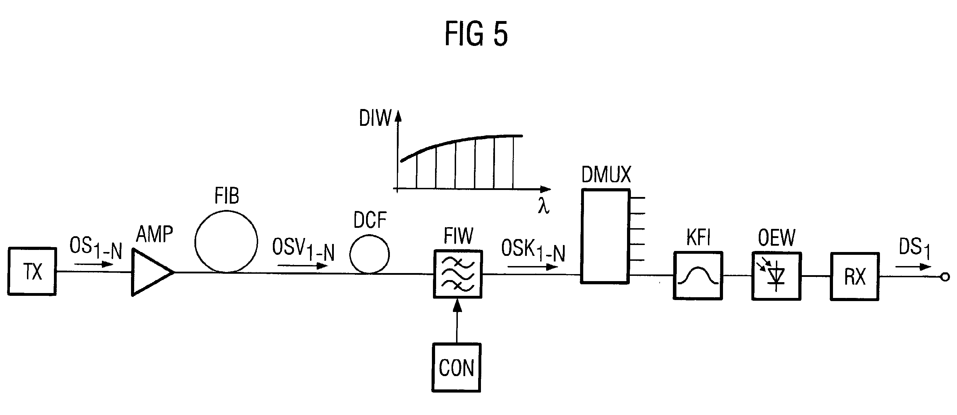

**Figur 5** zeigt ein optisches Übertragungssystem mit kanalspezifischer Dispersionskompensation. Ein Sender TX sendet ein optisches Wellenlängen-Multiplexsignal OS_{1-N} aus, dass durch einen Verstärker AMP verstärkt wird. Dieses Signal wird über eine Übertragungsfaser FIB übertragen, in die noch mehrere Verstärker eingeschaltet sein können. Durch die nichtidealen Eigenschaften der Übertragungsfaser FIB wird aus dem Signal OS_{1-N} ein verzerrtes optisches Signal OSV_{1-N}. Die Dispersion DIW ändert sich, wie ebenfalls in der Figur 1 oberhalb des Kompensationsfilters dargestellt ist, mit der Wellenlänge nicht linear, d.h. sie weist eine höhere Ordnung auf. Der Verlauf des nichtlinearen Anteils höherer Ordnung wird als wellenlängenabhängiger Dispersionsanteil bezeichnet. Die Dispersion des kann durch ein invers dimensioniertes Kompensationsfilter FIW weitgehend kompensiert werden.

Zur Vorkompensation wird verzerrte optische Multiplexsignal OSV_{1-N} durch eine dispersionskompensierende Faser DCF geleitet. Die dispersionskompensierende Faser kann aber nicht genau invers zu den Dispersion verursachenden Eigenschaften der Übertragungsfaser hergestellt werden. Es verbleibt wieder der nichtlineare wellenlängenabhängige Dispersionsanteil. Dieser wird durch einen entsprechenden inversen Verlauf der Übertragungsfunktion des Kompensationsfilters FIW kompensiert.

Die Periode (FSR - free spectral range) des Dispersions-Kompensationsfilters FIW umfasst mehrere Kanäle, vorzugsweise die Kanäle eines WDM-Multiplexsignals. Zur optimalen Dispersionskompensation muss die komplexe Übertragungsfunktion eines Filters optimiert werden. Hierzu eignet sich sowohl FIR- (beispielsweise Transversal- oder Latticefilter) als auch IIR-Filter (beispielsweise mit Ringresonatoren realisiert), deren komplexe Übertragungsfunktionen/Koeffizienten eingestellt werden.

Das kompensierte optische WDM-Signal OSK_{1-N} wird durch einen optischen Demultiplexer DMUX in Einzelsignale (Kanäle) aufgeteilt, die in optoelektronischen Wandlern OEW umgesetzt und im Empfänger RX verstärkt als elektrische Datensignale DS₁ bis DS_{N} ausgegeben werden. Die Einstellung der optimierten Übertragungsfunktion erfolgt durch eine Steuerung, die nach Möglichkeit zu einer Regelung erweitert werden sollte.

In **Figur 5** sind den Ausgängen des Wellenlängen-Demultiplexers DMUX jeweils ein Korrekturfilter KFI nachgeschaltet, um seine nichtidealen Übertragungseigenschaften, insbesondere seinen Phasengang, zu korrigieren. Das Korrekturfilter kann als IIR-(infinite impulse response) oder FIR-Filter (finite impulse response) ausgebildet sein, dessen komplexe Übertragungsfunktion einstellbar ist. Häufig ist es ausreichend, nur den Phasengang zu kompensieren. Das Korrekturfilter kann überall dort eingesetzt werden, wo es Probleme mit unerwünschten Filtereigenschaften auftreten. Ein gesteuertes oder geregeltes Korrekturfilter kann auf Änderungen der Filter- bzw. Systemparameter reagieren.

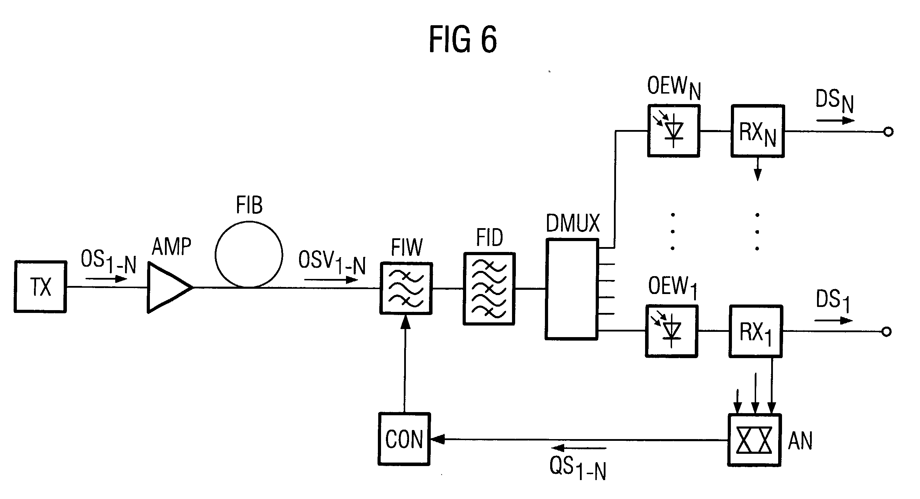

**Figur 6** zeigt eine weiterte Anordnung, die zusätzlich zu der aus Figur 5 bekannten Anordnung einen Regelkreis zur Einstellung des Dispersions-Kompensationsfilters FIW aufweist. Dieser umfasst einen optischen Demultiplexer DMUX zur Aufteilung des Multiplexsignals in Einzelsignale, die durch optoelektrische Wandler OEW₁ bis OEW_{N} in elektrische Datensignale DS₁ - DS_{N} umgesetzt werden.

Ein Analysator AN (oder mehrere Analysatoren) bewertet die Signalqualität der elektrischen (nicht begrenzten) Datensignale DS₁-DS_{N} der Übertragungskanäle (z.B. in zeitlicher Folge) und gibt ein Qualitätskriterium QS_{1-N} an eine Steuereinrichtung CON ab, die die Filterkoeffizienten anhand eines Optimierungsalgorithmus einstellt. Eine Grundentzerrung erfolgt entweder durch die dispersionskompensierende Faser DCF oder durch ein entsprechend dimensioniertes, ein fest einstellbares oder ein variabel einstellbares periodisches optisches Filter FID, das dem Kompensationsfilter FIW vor- oder nachgeschaltet ist.

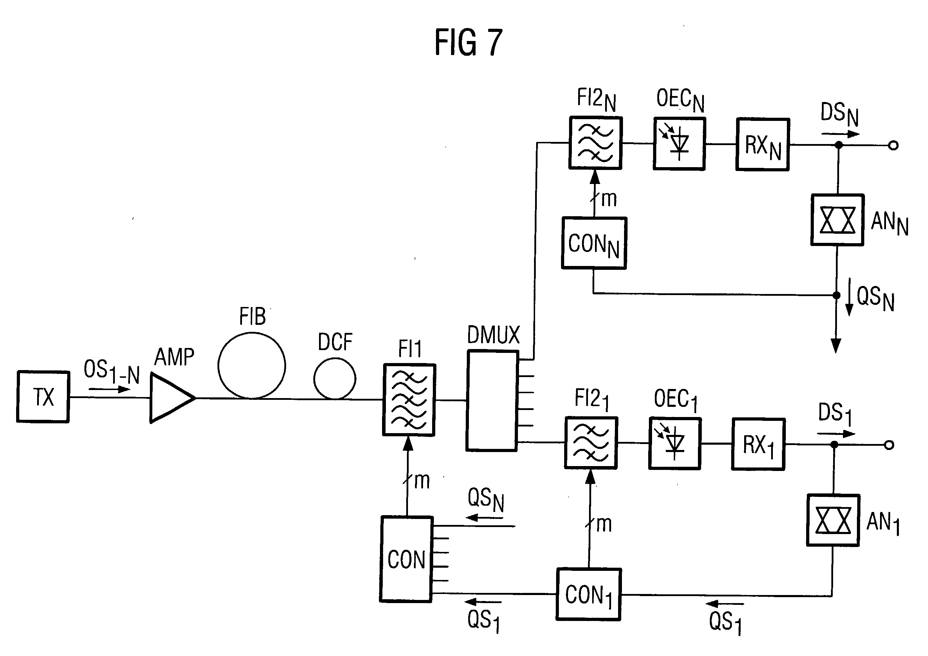

In **Figur 7** ist eine Kompensationseinrichtung zur Disperssions- und PMD-Kompensation von WDM-Signalen dargestellt, die mehrere Kompensationsanordnungen enthält, wobei für jeden Kanal funktionell jeweils ein Kompensationsfilter FI1 und eines der Filter FI2₁ - FI2_{N} in Serie angeordnet sind, die von zugehörigen Kompensation-Steuereinrichtungen CON2₁ bis CON2_{N} und einer gemeinsamen Dispersions-Steuereinrichtung CON gesteuert werden.

Als optisches Signal wird wieder ein WDM-Signal OS_{1-N} übertragen. Den Filtern ist eine dispersionskompensierende Faser DCF zur Vorkompensation vorgeschaltet, da der Stellbereich der Filter begrenzt ist. Ebenso kann die Vorkompensation gemeinsam für alle Kanäle durch ein weiteres periodisches Filter erfolgen.

Die Vorkompensation bei der Anordnung erfolgt durch die dispersionskompensierende Faser DCF gemeinsam für alle Kanäle. Im einstellbaren Dispersions-Kompensationsfilter FI1, vorzugsweise einem Transversalfilter, dessen Periodizität (FSR - free spectral range) vorzugsweise alle WDM-Kanäle eines Übertragungsbandes umfasst, wird die wellenlängenabhängige Restdispersion kompensiert.

Die Qualitätskriterien QS₁ - QS_{N} (Regelkriterien) werden von mehreren oder allen Kanälen abgeleitet und der ersten Steuereinrichtung CON1 zugeleitet, die die Koeffizienten des ersten Filters einstellt.

Das Dispersions-Kompensationsfilter FI1 kann auch als periodisches Filter ausgebildet sein und die dispersionskompensierende Faser ersetzen. Bei einer Variante kann ein mit dem Kanalabstand periodisches Filter 1 zur Entzerrung bei Vorliegen von Gruppenlaufzeitdispersion und/oder Selbstphasenmodulation-Kompensation eingesetzt werden.

Die Kompensation der Polarisationsmodendispersion sollte allerdings kanalweise mit kleiner Zeitkonstante erfolgen. Deshalb ist dem ersten Kompensationsfilter ein optischer Demultiplexer DEMUX nachgeschaltet, der die Kanäle/Einzelsignale des WDM-Signals separiert. Die in den einzelnen Kanälen übertragenen Signale DS₁ - DS_{N} werden in den zweiten Kompensationsfiltern FI2₁ bis FI2_{N} separat PDM-kompensiert, wobei die Qualitätskriterien QS₁,..., QS_{N} für jeden Kanal in einem separaten Analysator AN₁ bis AN_{N} ermittelt werden. Für die Dispersions- und die PMD-Kompensation können auch unterschiedliche Analysatoren verwendet werden.

Auch diese Kompensationseinrichtung kann durch weitere fest eingestellte oder adaptive Elemente zur Kompensation oder ein weiteres adaptives Kompensationsfilter oder elektrische Filter ergänzt werden. Insbesondere bei einer linearen optoelektrischen Wandlung kann eine gleichwertige optische PMD-Kompensation erfolgen.

### Bezugszeichen

- TX: Sender
- OS: optisches Signal
- AMP: Verstärker
- FIB: (Übertragungs-)Faser
- FI;FIB1, FIB2: Kompensationsfilter
- OSV: verzerrtes optisches Signal
- OSK: kompensiertes optisches Signal
- OEC: optoelektronischer Wandler
- RX: Empfänger
- AN: Analysator
- QS: Qualitätskriterium
- CON: Steuereinrichtung
- FI1: erstes Kompensationsfilter
- FI2: zweites Kompensationsfilter
- CON1: erste Steuereinrichtung
- CON2: zweite Steuereinrichtung
- DMUX: Demultiplexer
- DS: elektrisches Signal (Datensignal)
- RR: Ringresonator
- FIB,FR1,Fr2: Faser
- EA: Amplitudeneinsteller
- EP: Phaseneinstelle
- POLCON: Polarisationssteller
- SPL: Splitter
- COM: Kombinierer (Koppler)
- OSV1, OSV2: Signalkomponenten
- EFI: elektrisches Filter
- OSW: WDM-Signal
- DCF: dispersionskompensierende Faser
- FIW: Filter
- DMUX: Demultiplexer
- OE: optoelektronischer Wandler
- DS, DS1: Datensignal

## Patentansprüche

**1.** Kompensationsanordnung zur adaptiven Entzerrung eines verzerrten optischen Signals (OSV) mit einem einstellbaren optischen Kompensationsfilter (FI), dem das verzerrte optische Signal (OSV) zugeführt wird und das ein kompensiertes optisches Signal (OSK) abgibt, und mit einem Analysator (AN), der die Signalqualität ermittelt und über eine Steuereinrichtung (CON) die Übertagungsfunktion des optischen Kompensationsfilter (FI) derart einstellt, dass die Signalqualität optimiert wird,
**dadurch gekennzeichnet,**
**dass** die Übertagungsfunktion des Kompensationsfilters (FI) komplex ist und ihre reellen und imaginären Anteile eingestellt werden.

**2.** Kompensationsanordnung nach Anspruch 1,
**dadurch gekennzeichnet,**
**dass** sie zur Kompensation von Polarisationsmodendispersion einen Polarisationssplitters (POL, SP) enthält, der das verzerrte optischen Signal (OSV) in zwei stabile orthogonale Signalkomponenten (OSV1, OSV2) aufteilt, die jeweils einem gesteuerten optischen PMD-Kompensationsfilter (FIP1, FIP2) zugeführt werden, und
**dass** einem Kombinierer (COM) die Signalkomponenten (OSV1, OSV2) Ausgangssignale der PMD-Kompensationsfilter (FIP1, FIP2) zugeführt werden, der sie zu dem kompensierten optischen Signal (OSK) zusammengefasst.

**3.** Kompensationsanordnung nach Anspruch 2,
**dadurch gekennzeichnet,**
**dass** statt eines der beiden einstellbaren PMD-Kompensationsfilter (FIP1, FIP2) ein fest einstellbares Filter oder ein festes oder einstellbares Laufzeitglied angeordnet ist.

**4.** Kompensationsanordnung nach einem der vorhergehenden Ansprüche,
**dadurch gekennzeichnet,**
**dass** sie ein dem optisches Kompensationsfilter (FI, FIP1, FIP2) nachgeschaltetes elektrisches Filter (EFI) enthält.

**5.** Kompensationsanordnung nach Anspruch 1,
**dadurch gekennzeichnet,**
**dass** zur wellenlängenabhängigen Dispersionskompensation eines Wellenlängen-Multiplexsignals (OS_{1-N}) die Periode des optischen Dispersions-Kompensationsfilter (FIW) mehrere Übertragungskanäle eines WDM-Signals (OS) umfasst und dass seine komplexe Übertragungsfunktion invers zum Dispersionsverlauf des Übertragungssystems ist.

**6.** Kompensationsanordnung nach einem der vorhergehenden Ansprüche,
**dadurch gekennzeichnet,**
**dass** das optisches Kompensationsfilter (FI, FIP1, FIP2) ein Transversalfilter mit einstellbaren komplexen Filterkoeffizienten (k1+jb1; k2+jb2; ...) ist.

**7.** Kompensationsanordnung nach einem der Ansprüche 1 bis 15,
**dadurch gekennzeichnet,**
**dass** das optische Kompensationsfilter (FI, FIP1, FIP2) aus der Reihenschaltung eines Transversalfilters und eines rekursiven Filters besteht.

**8.** Kompensationsanordnung nach einem der vorhergehenden Ansprüche,
**dadurch gekennzeichnet,**
**dass** sie ein in Serie mit einem der Kompensationsfilter (FI, FI1, FIW) geschaltetes weiteres Kompensationselement (DCF) enthält.

**9.** Kompensationsanordnung nach Anspruch 8,
**dadurch gekennzeichnet,**
**dass** zur Grundkompensation in Serie mit dem optischen Dispersions-Kompensationsfilters (FIW) eine dispersionskompensierende Faser (DCF) oder ein weiteres Filter (FID) mit im Abstand der Übertragungskanäle periodischen Verlauf seiner Übertragungsfunktion geschaltet ist.

**10.** Kompensationsanordnung nach einem der vorhergehenden Ansprüche,
**dadurch gekennzeichnet,**
**dass** eine Regeleinrichtung (AN, CON) zur adaptiven Anpassung der Übertragungsfunktion des Kompensationsfilters (FI, FI1, FIW) vorgesehen ist.

**11.** Kompensationsanordnung nach Anspruch 10,
**dadurch gekennzeichnet,**
**dass** sie einen optoelektrischen Wandler (OEC) enthält, dem das kompensierte optische Signal (OSK) zugeführt wird und der dieses in ein elektrisches Datensignal (DS) umsetzt, und dass dem optoelektrischer Wandler (OEC) ein Analysator (AN) nachgeschaltet ist, der aus dem elektrischen Datensignal (DS) ein Qualitätskriterium gewinnt, das als Regelsignal (QS) zur Einstellung des optischen Kompensationsfilters (FI, FIP1, FIP2) dient.

**12.** Kompensationsanordnung nach Anspruch 11,
**dadurch gekennzeichnet,**
**dass** bei einem übertragenen Wellenlängenmultiplexsignal (OS_{1-N}) mindestens ein Analysator (AN) die Signalqualität in mehreren Übertragungskanälen bewertet und dass das so gewonnene Qualitätskriterium (QS₁ - QS_{N}) zur Einstellung des Dispersions-Kompensationsfilters (FIW) verwendet wird.

**13.** Kompensationsanordnung nach einem der vorhergehenden Ansprüche,
**dadurch gekennzeichnet,**
**dass** zur Realisierung einer gewünschten Filterfunktion mit Filterkomponenten (DMUX) ein optisches Korrekturfilter (KFI) in Serie geschaltet ist, durch dessen komplexe Übertragungsfunktion insbesondere die durch Komponenten mit Filterstruktur (FI) hervorgerufenen Signalverzerrungen korrigiert werden.

**14.** Kompensationsanordnung nach Anspruch 13,
**dadurch gekennzeichnet,**
**dass** das Korrekturfilter (KFI) als Allpass zur Korrektur des Phasenganges ausgebildet ist.

**15.** Kompensationsanordnung nach Anspruch 13 oder 14,
**dadurch gekennzeichnet,**
**dass** das Korrekturfilter (KFI) einstellbare komplexe Koeffizienten aufweist.

**16.** Kompensationseinrichtung zur Kompensation von Verzerrungen eines Wellenlängenmultiplexsignals nach einem der vorhergehenden Ansprüche,
**dadurch gekennzeichnet,**
**dass** sie vorzugsweise zur Dispersionskompensation eines Wellenlängen-Multiplexsignals (OS_{1-N}) eine erste Kompensationsanordnung mit einem Dispersions-Kompensationsfilter (FI1) in einem ersten Regelkreises (FI1, RX₁ - RX₁, AN₁ - AN_{N}, CON1) enthält,
**dass** das Ausgangssignal des Dispersions-Kompensationsfilters (FI1) einem optischen Demultiplexer (DMUX) zugeführt ist, der das Wellenlängen-Multiplexsignal in Einzelsignale aufteilt, die jeweils einer funktionsmäßig in Reihe geschalteten weiteren adaptiven Kompensationsanordnung (FI2₁, RX₁, AN₁, CON2₁, ..., FI2_{N}, RX_{N}, AN_{N}, CON2_{N,}) mit jeweils einem optischen PMD-Kompensationsfilter (FI2₁, ..., FI2ₖ) zugeführt werden.

**18.** Kompensationseinrichtung nach Anspruch 17,
**dadurch gekennzeichnet,**
**dass** statt der optischen PMD-Kompensationsfilter (FI2₁, ..., FI2ₖ) jeweils ein optoelektrische Wandler (OEW) und ein adaptives elektrischen Filter (EFI) angeordnet sind.
